# EUROPÄISCHE PATENTANMELDUNG

(11) **EP 4 524 358 A1**
(43) Veröffentlichungstag der Anmeldung: **19.03.2025**
(21) Anmeldenummer: 23197449.4
(22) Anmeldetag: 14.09.2023
(51) Int. Cl.: E06B 9/24

(54) **TORSYSTEM MIT OPTISCH SCHALTBAREN FENSTERN**

(71) Anmelder: Botevo Building Solutions GmbH, 35764 Sinn (DE)
(72) Erfinder: Hild, Matthias, 60594 Frankfurt am Main (DE)
(74) Vertreter: Grünecker Patent- und Rechtsanwälte PartG mbB

(57) **Zusammenfassung**

Ein Torsystem ist offenbart. Das Torsystem umfasst ein Tor mit einer Vielzahl von Segmenten, mindestens ein Kunststofffenster in mindestens einem Segment der Vielzahl von Segmenten, wobei das mindestens eine Kunststofffenster eine elektrochromatische Schicht umfasst, und eine Steuerung, die ausgestaltet ist, selektiv eine Transparenz von einem oder mehreren Kunststofffenstern des mindestens einen Kunststofffensters basierend auf einem elektrochromen Effekt zu ändern.

## Beschreibung

Die Erfindung bezieht sich allgemein auf das Gebiet von Garagen- und Industrietoren, sowie insbesondere auf Torsysteme mit optisch schaltbaren Fenstern.

Ein Tor, wie beispielsweise ein Industrietor oder auch ein Hallentor, wird unter anderem in produzierenden Unternehmen (Lagerhallen, Intralogistik, Industrie, Logistikzentren), kritischer Infrastruktur (Feuerwehr, Rettungskräfte, Polizei), Parkhäusern und Tiefgaragen sowie in der Verkehrsinfrastruktur (Betriebshöfe, Straßen- und Autobahnmeistereien, Flughäfen) eingesetzt. Insbesondere bei Lagerhallen und Industrieanlagen können Tore genutzt werden, um große Gebäudeöffnungen zu schließen. Bei solchen Toren kommt es vor allem auf die langlebige Funktion an, da sie oft mit komplexen Produktions- oder Logistikprozessen gekoppelt sind, deren Unterbrechung erhebliche Kosten verursachen kann. Anforderungen an ein Tor sind daher Robustheit und eine zuverlässige Funktion. Je nach Anforderung kommen so z. B. Rolltore, Sektionaltore, Hubtore und Schnelllauftore zum Einsatz, die sich senkrecht nach oben öffnen und somit wenig Platz vor oder hinter der Einfahrt benötigen. Falttore sind ein weiteres Beispiel. Diese benötigen mehr Platz für den Schwenkbereich der Flügel, können aber einen breiteren Bereich abdecken.

Allerdings werden an Tore neben Robustheit und einer zuverlässigen Funktion häufig noch weitere Anforderungen gestellt. Beispielsweise kann taghelles Arbeiten in einer Halle, freier Blick nach draußen und Bürgertransparenz gewünscht werden. Eine Lösung hierfür kann es sein, die Tore mit einem oder mehreren Fenstern auszurüsten. Ein Nachteil dieser Tore mit Fenstern ist, dass Einbrecher schnell einen Überblick über die Inhalte einer Halle bekommen können. Ein weiterer Nachteil ist, dass bei Einsatzkräften, wie der Feuerwehr, mit großen durchsichtigen Toren zwar eine gewisse Bürgernähe erzeugt werden kann, die Privatsphäre der Einsatzkräfte allerdings nicht berücksichtigt wird oder eingeschränkt ist.

Der Erfindung liegt die Aufgabe zugrunde, ein verbessertes Torsystem für taghelles Arbeiten in Hallen unter Berücksichtigung von Aspekten wie Sicherheit, Einbruchschutz und Privatsphäre, Sonnenschutz, Hitzeschutz, Blendschutz, UV-Schutz, Sichtschutz, einem aktiven Alarmsignal und Vogelschutz bereitzustellen.

Die vorliegende Erfindung löst die angesprochenen Probleme und die Aufgabe durch ein Torsystem, umfassend: Ein Tor mit einer Vielzahl von Segmenten, mindestens ein Kunststofffenster in mindestens einem Segment der Vielzahl von Segmenten, wobei jedes der mindestens einen Kunststofffenster eine elektrochromatische Schicht umfasst, und eine Steuerung, die ausgestaltet ist, selektiv eine Transparenz von einem oder mehreren Kunststofffenstern des mindestens einen Kunststofffensters basierend auf einem elektrochromen Effekt zu ändern.

Die Unteransprüche enthalten weitere vorteilhafte Ausführungsformen der Erfindung.

Das erfindungsgemäße System hat den Vorteil, dass die Transparenz der elektrochromatischen Fenster so geändert werden kann, dass wahlweise ein freier Blick nach draußen ermöglicht wird oder ein Sichtschutz entsteht, um beispielsweise vor Einbruch zu schützen oder die Privatsphäre von Menschen in einer Halle zu erhöhen. Die elektrochromatischen Fenster können situativ angepasst eingestellt werden. Durch die Kunststofffenster werden robuste Fenster, die den besonderen Anforderungen an bewegliche Toranlagen angepasst sind, bereitgestellt.

Eine Schaltung der Folie auf Milchglasoptik kann das Glas als Hindernis für Tiere, wie Vögel, sichtbar machen und einen effektiven Schutz vor Vogelschlag bieten. Kollisionen von Vögeln mit klarsichtigen Glasflächen von großflächigen Toranlagen werden so effektiv verhindert. Mittels der Steuerung kann der Vogelschutz speziell zu saisonalen Vogelzugzeiten individuell reguliert oder adaptiert werden.

In Ausführungsformen umfassen die Kunststofffenster eine Doppel- und Mehrfachverglasung aus Kunststoff, wie beispielsweise Polymethylmethacrylat, Styrol-Acrylnitril oder Polycarbonat. Die Doppelverglasung umfasst eine Außenscheibe und eine Innenscheibe. Die elektrochromatische Schicht kann eine elektrochromatische Folie sein oder umfassen. Die elektrochromatische Folie kann zwischen der Außenscheibe und der Innenscheibe in dem Kunststofffenster angeordnet sein. Die Außenscheibe und die Innenscheibe können durch Abstandshalter voneinander getrennt sein. Die elektrochromatische Folie kann beispielsweise auf die Innenseite der Außenscheibe aufgetragen sein. Alternativ kann die elektrochromatische Folie auf die Innenseite der Innenscheibe aufgetragen sein. Durch die Verwendung einer Doppelverglasung mit der elektrochromatischen Schicht oder Folie zwischen den Scheiben, kann die elektrochromatischen Schicht oder Folie vor Beschädigungen und Verschmutzung geschützt werden und eine Langlebigkeit der Fenster ermöglicht werden.

In Ausführungsformen kann die Wandstärke der Außenscheibe mindestens 3 mm oder mindestens 4 mm umfassen. Die Wandstärke der Innenscheibe kann mindestens 3 mm oder mindestens 4 mm umfasst. Die Wandstärke der Außenscheibe kann größer sein als die Wandstärke der Innenscheibe. Alternativ kann die Wandstärke der Innenscheibe größer sein als die Wandstärke der Außenscheibe. In Ausführungsformen ist die Wandstärke der Innenscheibe gleich der Wandstärke der Außenscheibe. Die Außenscheibe und/oder die Innenscheibe kann mit einer kratzfesten Beschichtung versehen sein. Die Beschichtung kann auf der Außenseite aufgetragen sein. Die Außenscheibe und/oder die Innenscheibe kann Polymethylmethacrylat, Polycarbonat oder Styrol-Acrylnitril (SAN) umfassen. Mit Wandstärken von mindestens 3 mm Dicke der Innen- und/oder Außenscheibe werden besonders stabile und robuste Fenster bereitgestellt, die die Anforderungen für Industrietore erfüllen können.

In Ausführungsformen kann das Torsystem mindestens einen Sensor umfassen. Der mindestens eine Sensor kann ausgestaltet sein mindestens ein Signal zu erfassen. Die Steuerung kann ausgestaltet sein die Transparenz der ein oder mehreren Kunststofffenster in Abhängigkeit des mindestens einen Signals zu ändern. Der mindestens eine Sensor kann ausgestaltet sein um eine Präsenz eines Menschen in einem Bereich vor dem Torsystem oder Tor zu detektieren. Die Steuerung kann die Transparenz der ein oder mehreren Kunststofffenster in Abhängigkeit der Präsenz des Menschen ändern. Zusätzlich oder alternativ kann der mindestens eine Sensor ausgestaltet sein um eine Präsenz eines Menschen in einem Bereich hinter dem Torsystem oder Tor zu detektieren. Die Steuerung kann die Transparenz der ein oder mehreren Kunststofffenster in Abhängigkeit der Präsenz des Menschen ändern. Vor dem Torsystem bezeichnet dabei einen Bereich auf einer Seite des Tors, der außerhalb eines Gebäudes in dem das Torsystem verbaut ist liegen kann. Hinter dem Torsystem bezeichnet dabei einen Bereich auf einer gegenüberliegenden Seite des Tors, der innerhalb eines Gebäudes in dem das Torsystem verbaut ist liegen kann. Zusätzlich oder alternativ kann der mindestens eine Sensor ausgestaltet sein um eine Bewegungsrichtung eines Menschen relativ zum Torsystem zu detektieren. Die Steuerung kann die Transparenz der ein oder mehreren Kunststofffenster in Abhängigkeit der Bewegungsrichtung ändern. Zusätzlich oder alternativ kann der mindestens eine Sensor ausgestaltet sein um eine Identität von ein oder mehreren Menschen zu detektieren. Die Steuerung kann die Transparenz der ein oder mehreren Kunststofffenster in Abhängigkeit der ein oder mehreren Identitäten ändern. Zusätzlich oder alternativ kann der mindestens eine Sensor ausgestaltet sein um eine Lichtintensität zu messen. Die Steuerung kann die Transparenz der ein oder mehreren Kunststofffenster in Abhängigkeit der Lichtintensität ändern. Zusätzlich oder alternativ kann der mindestens eine Sensor ausgestaltet sein um eine Sonneneinstrahlung durch das mindestens eine Kunststofffenster oder einen Teil davon zu detektieren. Die Steuerung kann die Transparenz der ein oder mehreren Kunststofffenster in Abhängigkeit der Sonneneinstrahlung ändern. Zusätzlich oder alternativ kann der mindestens eine Sensor ausgestaltet sein um ein Signal einer Fernsteuerung eines Nutzers zu empfangen. Die Steuerung kann die Transparenz der ein oder mehreren Kunststofffenster in Abhängigkeit des Signals der Fernsteuerung ändern. Zusätzlich oder alternativ kann der mindestens eine Sensor ausgestaltet sein um eine Gefahrensituation, wie beispielsweise ein Gasleck, ein Feuer oder eine ungewollte Änderung einer Temperatur oder eines Drucks, zu detektieren.

Die Steuerung kann die Transparenz der ein oder mehreren Kunststofffenster in Abhängigkeit der Gefahrensituation ändern. Zusätzlich oder alternativ kann der mindestens eine Sensor ausgestaltet sein um einen Einbruch zu detektieren. Die Steuerung kann die Transparenz der ein oder mehreren Kunststofffenster in Abhängigkeit des detektierten Einbruchs ändern. Im Falle eines detektierten Einbruchs oder einer detektierten Gefahrensituation kann die Transparenz wiederholt geändert werden. Dies kann durch wiederholtes kontinuierliches Anund Ausschalten der elektrochromatischen Schicht erfolgen.

Durch eine automatische Schaltung von Kunststoffscheiben auf undurchsichtig, nach eingestellter Zeitschaltuhr (zum Beispiel nach Schichtende jeden Abend um 18:00 Uhr oder täglich angepasst immer 15 Minuten nach Beginn der bürgerlichen Dämmerung) oder wenn ein in unmittelbarer Nähe des Torsystems installierter Sensor eine Lichtintensität in einem vordefinierten Bereich, der einer Dämmerung entsprechen kann, detektiert, kann ein präventiver Einbruchschutz bereitgestellt werden. Alternativ kann die Transparenz von Kunststofffenstern auch durch einen Nutzer mittels einer Fernsteuerung geändert werden. Zum Beispiel kann die Transparenz mittels einer App auf einem Smartphone oder einem Computer geändert werden.

In Ausführungsformen kann das Torsystem einen Sensor umfassen, der ausgestaltet ist um die Präsenz von Menschen zu detektieren. Wenn sich Personen dem Tor nähern schaltet das intelligente System automatisch auf undurchsichtig. Die zugrundeliegende Sensorik kann präzise die Objekte filtern und differenzieren. Zum Beispiel kann zwischen Querverkehr vor dem Tor an einer Straße einerseits und Personen oder Fahrzeugen, die sich auf das Tor zubewegen andererseits, unterschieden werden. Dadurch wird verhindert, dass die elektrochrome Folie unnötig auf undurchsichtig schaltet. Zusätzlich kann der mindestens eine Sensor über eine Parallelverkehrsausblendung verfügen. Dadurch schaltet die Folie nicht bei jedem Objekt um, das gerade den Sensorbereich schneidet oder durchquert, sondern blendet unnötige Bewegung einfach aus. Der Betreiber oder Nutzer kann das Erfassungsfeld des Sensors so einstellen, dass nur noch Objekte mit einer bestimmten Mindestgröße erfasst werden.

In Ausführungsformen kann eine kontinuierliche Zustandsänderung der elektrochromen Folie ein "An-Aus"-Blinken (oder ein Blinken in einer Farbe) der elektrochromaten Folie erzeugen und so ein deutlich sichtbares Warnsignal senden. Die Steuerung kann die Transparenz der Kunststofffenster auch basierend auf einem Alarmsignal von einem Gebäudealarmsystem ändern. Zum Beispiel kann die Steuerung mit einem Gebäudealarmsystem verbunden sein. Das Gebäudealarmsystem kann der Steuerung melden, dass in das Gebäude eingebrochen wurde oder eine Gefahrensituation entstanden ist. Die Steuerung kann die Transparenz der Kunststofffenster kontinuierlich als zusätzliches Warnsignal ändern (in Ergänzung zu einer Alarmsirene oder Lichthupe). Ein kontinuierliches "An-Aus"-Blinken der elektrochromaten Folie kann ein deutliches Signal an die Einsatzkräfte eines Rettungsdienstes, wie beispielsweise einer Feuerwehr, senden um auf einen Einsatz aufmerksam zu machen. Dies kann in Ergänzung zu einer Sirene und Lichthupe erfolgen.

In Ausführungsformen wird jedes der mindestens einen Kunststofffenster individuell mittels eines flexiblen Kabels mit der Steuerung verbunden. Dies ermöglicht die individuelle Steuerung der Transparenz jedes Kunststofffensters der mindestens einen Kunststofffenster. Durch die individuelle Verkabelung können einzelne Fenster schnell und effektiv ausgetauscht werden. Die Steuerung der Transparenz der Kunststofffenster kann durch einen Torbetreiber, Nutzer, oder Anlagenverwalter mittels App oder Desktopversion erfolgen. Die Steuerung kann eine digitale Steuerung umfassen und die Steuerung kann automatisch die Transparenz der Kunststofffenster in Abhängigkeit von definierten Szenarien steuern. Es können flexibel einzelne Scheiben, Sektionsreihen oder -spalten oder die gesamte Kunststoffverglasungsfläche angesteuert werden. Basierend auf einer Detektion von Sonneneinstrahlung auf das Tor oder einen Teil des Tores, können einzelne Scheiben oder die gesamte Fläche intelligent geschaltet werden. Dies ermöglicht eine vorteilhafte Optimierung des Gebäudeklimas. Außerdem kann einem Blenden der Nutzer auf der Halleninnenseite entgegenwirkt werden.

Die transparente Einstellung der elektrochromatischen Fenster kann natürliches Tageslicht und Wärme ins Gebäude einlassen und ermöglicht den Sichtkontakt nach außen. Der bauphysikalische Nachteil einer transparenten Verglasung ist, dass Hitze und Sonneneinstrahlung nicht dosiert werden können. Der Raum hinter den Toren kann sich bei Sonneneinstrahlung unangenehm aufheizen. Durch das Schalten auf undurchsichtig kann bei intensiver Sonneneinstrahlung dem Aufheizen der Halle (z.B. im Sommer) entgegengewirkt werden. Die intelligente Sensorik spart Kosten, Energie und CO2, weil der Energiebedarf für Klimaanlagen reduziert wird. Die Sensorik kann ausgestaltet sein um einen Wert, der einer Sonneneinstrahlung entspricht, zu detektieren. Übersteigt dieser Wert, wie beispielsweise eine Lichtintensität oder eine Temperatur, einen festgelegten Schwellwert, kann die Steuerung die Transparenz von Kunststofffenstern ändern. Beispielsweise kann ein Blendschutz für eine verbesserte Energieeffizienz durch Minimierung von Aufheizen eines Gebäudes eingeschaltet werden. In der kalten Jahreszeit kann dieser Effekt umgekehrt genutzt werden. Die Halle kann mittels Sonnenstrahlung durch transparente Einstellung zusätzlich temperiert werden.

In Ausführungsformen ist das Tor ein Industrietor, wie beispielsweise ein Sektionaltor, ein Falttor, ein Schnelllauftor, ein Hubstaffeltor, ein Hebefalttor, ein Hangartor, ein Gewebehubtor oder ein Schiffswerfttor. Die Transparenz jedes Kunststofffensters der mindestens einen Kunststofffenster kann mittels der elektrochromatischen Schicht so geändert werden, dass wahlweise ein Sichtschutz eingeschaltet oder ausgeschaltet wird. Der Sichtschutz kann einzelne Fenster umfassen oder ganze Torflächen. Benachbarte Segmente der Vielzahl von Segmenten des Tors können gelenkig miteinander verbunden sein, um das Tor aus einer Schließstellung in eine Offenstellung und aus der Offenstellung in die Schließstellung zu bringen. Die Kabel, die jedes der mindestens einen Kunststofffenster mit der Steuerung verbinden, können in einem Kabelstrang zusammengefasst sein. Die Steuerung kann zusätzlich ausgestaltet sein, das Tor aus der Schließstellung in die Offenstellung und aus der Offenstellung in die Schließstellung zu bringen. Das Tor kann eine integrierte Tür, beispielsweise eine Schlupftür, umfassen. Das Tor kann zumindest in dem Bereich der Tür mit einem bodenseitigen Stabilisierungselement ausgebildet sein. Die Tür kann ein Kunststofffenster des mindestens einen Kunststofffensters umfassen.

In Ausführungsformen ist die Steuerung ausgestaltet, die Transparenz jedes Kunststofffensters des mindestens einen Kunststofffensters mittels der elektrochromatischen Schicht automatisch nach Ablauf eines vorbestimmten Intervalls nach einer letzten Transparenzänderung zu ändern. Durch das automatische Aktivieren der elektrochromatischen Fenster innerhalb einer bestimmten Zeit kann die Langlebigkeit der Fenster erhöht werden. Das Intervall kann 72 Stunden oder weniger betragen. Ein Intervall von 72 oder weniger Stunden erhöht die Langlebigkeit der Fenster ohne einen Betrieb zu stark zu beeinflussen. Ein Nutzer kann das Intervall einstellen. Zum Beispiel kann der Nutzer für das Intervall bestimmte Tage in einer Woche und/oder Uhrzeiten wählen.

Die vorliegende Erfindung löst die angesprochenen Probleme und die Aufgabe ferner durch ein Verfahren zur Herstellung einer flächigen Struktur. Das Verfahren umfasst die Schritte des Auftragens einer elektrochromatischen Schicht auf eine erste Kunststoffscheibe; des Anfertigens eines Kunststofffensters mit einer Doppelverglasung unter Verwendung der ersten Kunststoffscheibe mit der elektrochromatischen Schicht und einer zweiten Kunststoffscheibe; des Einsetzens des Kunststofffensters in eine flächige Struktur; und des elektrischen Verbindens des Kunststofffensters mit einer Steuerung zur Änderung einer Transparenz des Kunststofffensters mittels der elektrochromatischen Schicht.

In Ausführungsformen ist eine Wandstärke der ersten Kunststoffscheibe mindestens 2 mm, mindestens 3 mm, mindestens 4 mm oder mindestens 5 mm. Eine Wandstärke der zweiten Kunststoffscheibe kann mindestens 2 mm, mindestens 3 mm, mindestens 4 mm oder mindestens 5 mm betragen. Die flächige Struktur kann ein Trennelement oder ein Tor, vorzugsweise ein Industrietor wie oben näher spezifiziert, sein oder umfassen.

Das erfindungsgemäße System kann durch weitere, jeweils für sich vorteilhafte, Ausgestaltungen weiter verbessert werden. Technische Merkmale der einzelnen Ausgestaltungen können dabei beliebig miteinander kombiniert und/oder weggelassen werden, sofern es nicht auf den mit dem weggelassenen technischen Merkmal erzielten technischen Effekt ankommt.

Der vorliegende Erfindungsgegenstand soll im Weiteren anhand beispielhafter Zeichnungen näher beschrieben werden. In den Zeichnungen sind Beispiele vorteilhafter Ausgestaltungen der Erfindung gezeigt.

Es zeigen:
Figur 1 eine schematische Darstellung eines erfindungsgemäßen Torsystems mit optisch schaltbaren Fenstern nach einer Ausführungsform, und
Figur 2 ein Flussdiagramm eines Verfahrens zur Herstellung einer flächigen Struktur, beispielsweise eines Torsystems mit optisch schaltbaren Fenstern nach einer Ausführungsform.

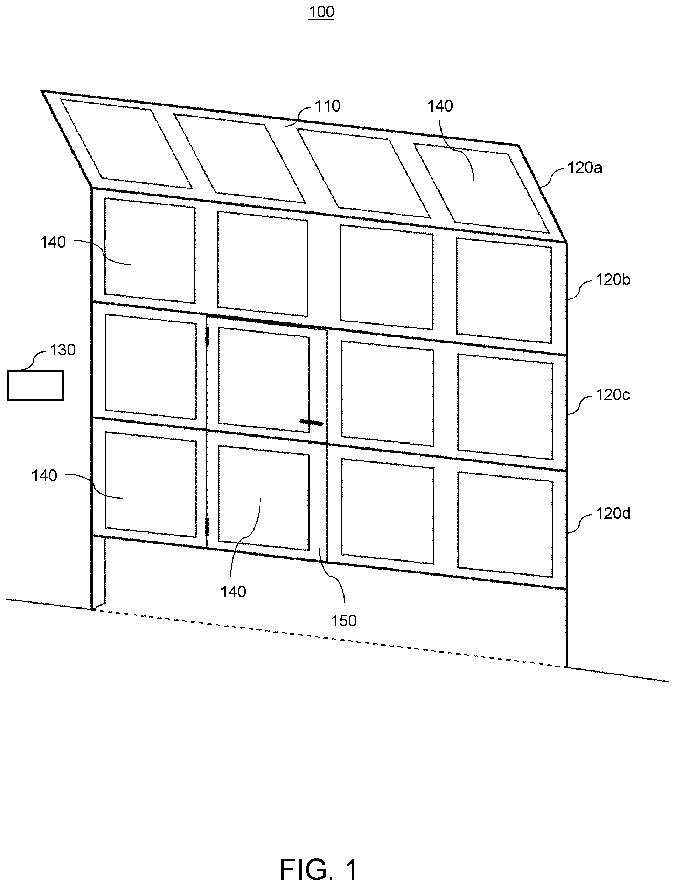

Figur 1 zeigt ein Torsystem 100. Das Torsystem umfasst ein Tor 110. In Figur 1 ist beispielhaft ein Sektionaltor als Tor 110 dargestellt. Alternativ kann das Tor auch ein Falttor, ein Schnelllauftor, ein Hubstaffeltor, ein Hebefalttor, ein Hangartor, ein Gewebehubtor oder ein Schiffswerfttor oder eine Kombination aus diesen sein.

Das Tor umfasst eine Vielzahl von Segmenten 120a-d. Das Tor kann 2 oder mehr Segmente umfassen. Zum Beispiel kann das Tor 4, 6, 8, 10, 12, 20 oder mehr Segmente umfassen. In mindestens einem der Segmente 120a-d ist mindestens ein Kunststofffenster 140 eingebaut. In Figur 1 sind beispielhaft in jedem der Segmente 120a-d vier Fenster 140 eingebaut. Die Anzahl an eingebauten Fenstern 140 kann von Segment zu Segment variieren.

Die Kunststofffenster 140 umfassen elektrochromatische Materialien um die Transparenz der Fenster zu steuern. Jedes Kunststofffenster 140 ist elektrisch mit einer Steuerung 130 verbunden. Die Steuerung 130 ist ausgestaltet um die Transparenz der elektrochromatischen Kunststofffenster zu ändern. Zum Beispiel kann durch Anlegen oder Wegnehmen einer Spannung an die elektrochromatische Schicht oder Folie ein Fenster 140 von einem durchsichtigen Zustand zu einem undurchsichtigen Zustand übergehen. Somit lässt sich das Kunststofffenster selektiv als Sichtschutz oder durchsichtiges Fenster verwenden. Zur Klarstellung sei erwähnt, dass das Tor auch einfache Kunststofffenster umfassen kann, welche keine elektrochromatische Materialien umfassen, deren Transparenz sich somit nicht steuern lässt.

Ein elektrochromer Effekt tritt auf, wenn Moleküle und Kristalle in einer elektrochromatischen Schicht oder Folie ihre optischen Eigenschaften durch ein äußeres elektrisches Feld oder einen Stromfluss ändern.

Benachbarte Segmente 120a und 120b der Vielzahl von Segmenten des Tors können gelenkig miteinander verbunden sein, um das Tor aus einer Schließstellung in eine Offenstellung und aus der Offenstellung in die Schließstellung zu bringen. Die Kabel, die jedes der mindestens einen Kunststofffenster mit der Steuerung 130 verbinden, können in einem Kabelstrang zusammengefasst sein. Die Steuerung 130 kann ausgestaltet sein, das Tor aus der Schließstellung in die Offenstellung und aus der Offenstellung in die Schließstellung zu bringen.

Die Segmente 120a-d des Tores 110 können einzelne, horizontal oder vertikal zum Boden verlaufende Sektionen oder Paneele umfassen, die mittels drehbarer Verbindungen in entsprechender horizontaler oder vertikaler Achse untereinander so verbunden sind, dass das Tor entlang einer Schiene zum Öffnen oder zum Schließen des Tores geführt werden kann. Die Schiene kann eine nicht gerade verlaufende Schiene sein.

Das Tor 110 umfasst eine integrierte Tür 150. Das Tor kann zumindest in dem Bereich der Tür 150 mit einem bodenseitigen Stabilisierungselement ausgebildet sein. Die Tür 150 kann ein Kunststofffenster, wie Kunststofffenster 140, mit einer elektrochromatischen Schicht umfassen.

Figur 1 zeigt eine Vielzahl von elektrochromatischen Kunststofffenstern 140. Die elektrochromatischen Kunststofffenster 140 umfassen elektrochromatische Materialien. Die elektrochromatischen Materialien können in den Kunststofffenstern 140 als Schicht angeordnet sein. Zum Beispiel können die elektrochromatischen Materialien in einer Folie enthalten sein. Die Folie kann zwischen einer Doppelverglasung der Kunststofffenster 140 angeordnet sein. Jedes der Kunststofffenster 140 ist elektrisch mit der Steuerung 130 verbunden. Die Steuerung 130 kann über mindestens einen flexiblen Kabelstrang, beispielsweise ein flexibles Flachbandkabel, mit den Kunststofffenstern 140 verbunden sein. Jedes elektrochromatische Kunststofffenster 140 kann zwei Stromschienen umfassen, die in elektrischer Verbindung mit der elektrochromatischen Folie sind. Die Kabel von den zwei Stromschienen können in einen flexiblen Kabelstrang führen oder Teil des flexiblen Kabelstrangs sein. Die Stromschienen können an zwei gegenüberliegenden Seiten des Kunststofffensters 140 liegen. Die Steuerung 130 ist ausgestaltet, eine elektrische Spannung an die Stromschienen anzulegen, um die optischen Eigenschaften der elektrochromatischen Folie zu ändern.

Ein Kabelstrang des mindestens einen Kabelstrangs kann eine Vielzahl Leiterdrähte umfassen, die parallel zueinander auf einer gleichen Ebene verlaufen. Zum Beispiel können alle Kunststofffenster eines Segments mit einem einzigen Kabelstrang verbunden sein. Alle Kunststofffenster eines anderen Segments können mit einem einzigen anderen Kabelstrang verbunden sein. Die Enden der Kabel des Kabelstrangs können Steckkontakte oder magnetische Verbindungselemente zum Verbinden mit dem Kunststofffenster 140 und mit der Steuerung 130 umfassen.

Der Kabelstrang kann ein Flachbandkabel sein oder umfassen. Diese haben Vorteile, einschließlich der Fähigkeit, mehrere parallele Drähte zum Übertragen von Strom, Kommunikationssignalen usw. in einem dünnen, flexiblen Format bereitzustellen.

In Ausführungsformen umfasst das Tor 110 zwei oder mehr elektrochromatische Kunststofffenster 140. Die Kabel sind ausgestaltet, einen elektrischen Kontakt zwischen jedem der elektrochromatischen Kunststofffenster 140 und der Steuerung 130 herzustellen. In einem Beispiel mit zwei elektrochromatischen Kunststofffenstern 140 mit jeweils zwei Stromschienen kann ein Bandkabel mit vier parallel zueinander laufenden Leiterdrähten verwendet werden um den elektrischen Kontakt herzustellen und die elektrochromatischen Kunststofffenster 140 nach Bedarf mit Strom zu versorgen.

Die Steuerung 130 kann ausgestaltet sein, die Position des Tors zu steuern oder zu ändern. Zum Beispiel kann das Torsystem 100 Komponenten zum Öffnen oder Schließen des Tors 110 umfassen. In einer Ausführungsform kann die Steuerung 130 die Transparenz von elektrochromatischen Kunststofffenstern 140 eines bestimmten Segmentes 120a ansteuern. Zum Beispiel können die Kunststofffenster 140 eines Segmentes 120a in einen Zustand des Sichtschutzes überführt werden, wohingegen die Kunststofffenster 140 eines anderen Segmentes 120d weiter in einem durchsichtigen Zustand sind.

Die Steuerung 130 kann in Abhängigkeit von einer Eingabe eines Nutzers die Kunststofffenster ansteuern, um selektiv die Transparenz von Kunststofffenstern der mindestens einen Kunststofffenster zu ändern. Die Eingabe kann manuell und/oder drahtlos (z. B. über eine Fernsteuerung) erfolgen. Die Änderung der Transparenz von Kunststofffenstern kann eine Farbänderung umfassen. Die Kunststofffenster können durch ein Anlegen einer Spannung eine Farbe wie beispielsweise blau, rot, gelb und/oder grün annehmen.

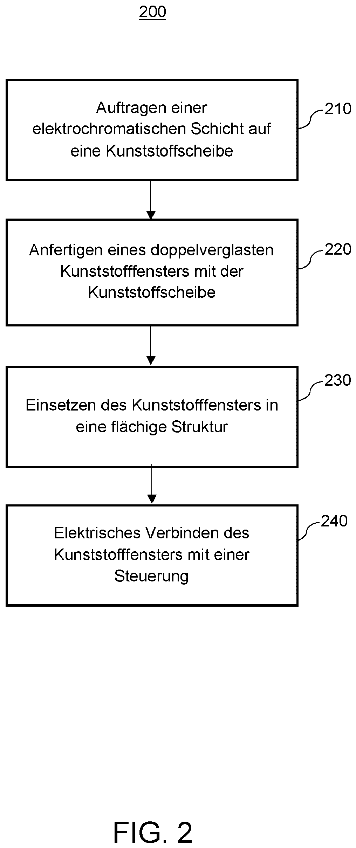

Figur 2 zeigt ein Flussdiagramm eines Verfahrens 200 zur Herstellung einer flächigen Struktur, beispielsweise eines Torsystems.

In einem ersten Schritt 210 wird eine elektrochromatische Schicht auf einer Kunststoffscheibe aufgetragen. Die elektrochromatische Schicht kann als Folie auf die Innenseite einer Kunststoffscheibe aufgetragen werden. Zum Beispiel kann die Folie auf die Kunststoffscheibe auflaminiert werden. Dies kann unter Reinraumbedingungen erfolgen. Die Dicke der Kunststoffscheibe kann mindestens 2 mm, mindestens 3 mm, mindestens 4 mm oder mindestens 5 mm betragen. Die Außenseite der Kunststoffscheibe kann mit einer kratzfesten Beschichtung beschichtet sein oder werden. In einer Ausführungsform beträgt die Gesamtdicke des zusammengebauten Kunststofffensters mindestens 2 mm.

In einem weiteren Schritt 220 wird das Kunststofffenster zusammengebaut. Dies umfasst das Zusammenbauen der Kunststoffscheibe mit der elektrochromatischen Schicht aus Schritt 210 mit einer weiteren Kunststoffscheibe, sodass ein Kunststofffenster mit einer Doppelverglasung aus zwei Kunststoffscheiben entsteht. Die elektrochromatische Schicht ist zwischen den beiden Kunststoffscheiben angeordnet.

In Schritt 230 wird das zusammengebaute Kunststofffenster in eine flächige Struktur, beispielsweise ein Tor eingebaut. Das Tor kann ein Garagentor oder Industrietor sein oder umfassen. Das Kunststofffenster kann in ein bereits bestehendes Tor eingebaut werden. Zum Beispiel kann ein altes Fenster in dem Tor durch das zusammengebaute Kunststofffenster ersetzt werden. Dadurch können Toranlagen mit elektrochromatischen Kunststofffenstern nachgerüstet werden. Alternativ können die Kunststofffenster auch in neue Tore eingebaut werden.

In Schritt 240 wird jedes elektrochromatische Kunststofffenster umfassend das zusammengebaute Kunststofffenster elektrisch mit einer Steuerung zum Steuern der elektrochromatischen Kunststofffenster verbunden. Jedes Kunststofffenster kann mit einem resilienten Kabelstrang verbunden werden. Die Kunststofffenster sind dauerhaft mit der Steuerung verbunden.

Elektrochromatisches Glas, auch schaltbares oder intelligentes Glas genannt, bietet die Möglichkeit der automatischen Abdunkelung von Fenstern. Elektrochromatisches Glas nutzt die Eigenschaft von elektrochromatischen Materialien, den Lichtdurchlass je nach angelegter Gleichspannung zu ändern. Durch das Anlegen einer geringen Spannung kann beispielsweise eine bläuliche Färbung erreicht werden. Bei der Abgabe von elektrischen Ladungen an eine mikroskopisch dünne Beschichtung (zum Beispiel Wolframtrioxid, Polyanilin) wird diese optisch aktiv und ändert ihre Farbe. Die Dauer dieses Vorgangs kann von einigen Sekunden bis zu mehreren Minuten betragen. Ist keine Spannung angelegt, so behält das Glas die gegenwärtige Farbe.

Elektrochromatisches Glas kann im Kraftfahrzeugbau für abblendende Rückspiegel und in der Gebäudeverglasung zur Temperaturregelung verwendet werden. Der Einsatz von elektrochromatischen Glas kann einen erheblichen Kostenfaktor darstellen. Daher wird elektrochromatisches Glas häufig nur an gut geschützten oder unbeweglichen Bereichen verwendet.

Aspekte der vorliegenden Erfindung betreffen bewegliche Toranlagen mit elektrochromatischen Folien. Der Einsatz in beweglichen Toranlagen, die der Maschinenrichtlinie unterliegen, stellt besondere Anforderungen betreffend Einsatz von Verglasungen in den Sektionen und Verkabelung der Fenster. Diese werden vorteilhaft durch den Einsatz von Kunststofffenstern nach den oben beschriebenen Ausführungsformen erfüllt. Die beweglichen Toranlagen können elektrisch betrieben werden. Die hierfür verwendete elektrische Ansteuerung kann erfindungsgemäß vorteilhaft auf die Steuerung elektrochromatischer Kunststofffenster erweitert werden.

Die elektrochromatischen Kunststofffenster für Tore nach oben beschriebenen Ausführungsformen sind flexibel einsetzbar und robust. Die elektrochromatischen Kunststofffenster können sowohl für neue Tore verwendet werden, als auch als Nachrüstlösung für bestehende Toranlagen. Die Lösung kann bei allen Arten von Toren zum Einsatz kommen. Dazu zählen unter anderem Sektionaltore, Falttore, Schnelllauftore und Hebefalttore. Durch den Einsatz der schaltbaren elektrochromatischen Schicht/Folie kann flexibel auf Knopfdruck von undurchsichtigen Verglasungen auf klarsichtige Kunststofffensterflächen gewechselt werden.

Die Schaltung der elektrochromatischen Schicht/Folie kann per Taster von mattiert weiß (= Sichtschutz) auf nahezu klarsichtig (variiert je nach Blickrichtung) erfolgen. Auf diese Weise kann taghelles Arbeiten in den Hallen, freier Blick nach draußen und Bürgertransparenz kombiniert werden mit verbessertem Einbruchschutz und situativ gewünschter Privatsphäre von Einsatzkräften. In Ausführungsformen sind auch andere Farben als weiß möglich. Beispielsweise kann die elektrochromatische Folie von klarsichtig in eine vom Material der Folie abhängige Farbe, wie beispielsweise rot, grün, blau oder eine Kombination der Grundfarben, überführt werden.

Der Stromverbrauch der elektrochromatischen Folie, die eine Flüssigkristall-Folie umfasst, ist niedrig. Die Folie kann über einen Transformator mit zum Beispiel 65 Volt (Toleranz +/- 5%) angesteuert werden. Sobald die Spannung per Fernbedienung oder kabelgebundener Ansteuerung eingeschaltet wird, wird die Folie durchsichtig. Wird die Spannung abgeschaltet, ist hingegen der mattierte Sichtschutz gegeben.

## Patentansprüche

1. Torsystem (100) umfassend:
ein Tor (110) mit einer Vielzahl von Segmenten (120a-d);
mindestens ein Kunststofffenster (140) in mindestens einem Segment (120a-d) der Vielzahl von Segmenten (120a-d), wobei jedes der mindestens einen Kunststofffenster (140) eine elektrochromatische Schicht umfasst; und
eine Steuerung (130), die ausgestaltet ist, selektiv eine Transparenz von ein oder mehreren Kunststofffenstern (140) der mindestens einen Kunststofffenster (140) basierend auf einem elektrochromen Effekt zu ändern.

2. Torsystem nach Anspruch 1, wobei mindestens eines, vorzugsweise jedes der mindestens einen Kunststofffenster eine Doppel- oder Mehrfachverglasung aus Kunststoff umfasst, und wobei die Doppel- oder Mehrfachverglasung eine Außenscheibe und eine Innenscheibe umfasst.

3. Torsystem nach Anspruch 2, wobei die elektrochromatische Schicht eine elektrochromatische Folie umfasst, und wobei die elektrochromatische Folie zwischen der Außenscheibe und der Innenscheibe des Kunststofffensters angeordnet ist.

4. Torsystem nach einem der Ansprüche 2 bis 3, wobei die Wandstärke der Außenscheibe mindestens 2 mm, mindestens 3 mm oder mindestens 4 mm beträgt, und/oder
die Wandstärke der Innenscheibe mindestens 2 mm, mindestens 3 mm oder mindestens 4 mm beträgt.

5. Torsystem nach einem der Ansprüche 2 bis 4, wobei die Wandstärke der Außenscheibe größer ist als die Wandstärke der Innenscheibe; und/oder
wobei die Außenscheibe und/oder die Innenscheibe mit einer kratzfesten Beschichtung versehen ist, und/oder
wobei die Außenscheibe und/oder die Innenscheibe Polymethylmethacrylat, Polycarbonat oder Styrol-Acrylnitril, SAN, umfasst.

6. Torsystem nach einem der Ansprüche 1 bis 5, umfassend mindestens einen Sensor, wobei der mindestens eine Sensor ausgestaltet ist mindestens ein Signal zu erfassen, und wobei die Steuerung ausgestaltet ist die Transparenz der ein oder mehreren Kunststofffenster in Abhängigkeit des mindestens einen Signals zu ändern.

7. Torsystem nach Anspruch 6, wobei der mindestens eine Sensor ausgestaltet ist:
eine Präsenz eines Menschen in einem Bereich vor und/oder hinter dem Torsystem zu detektieren, wobei die Steuerung ausgestaltet ist die Transparenz der ein oder mehreren Kunststofffenster in Abhängigkeit der Präsenz des Menschen zu ändern;
eine Bewegungsrichtung eines Menschen relativ zum Torsystem zu detektieren, wobei die Steuerung ausgestaltet ist die Transparenz der ein oder mehreren Kunststofffenster in Abhängigkeit der Bewegungsrichtung zu ändern;
eine Identität von ein oder mehreren Menschen zu detektieren, wobei die Steuerung ausgestaltet ist die Transparenz der ein oder mehreren Kunststofffenster in Abhängigkeit der ein oder mehreren Identitäten zu ändern;
eine Lichtintensität zu messen, wobei die Steuerung ausgestaltet ist die Transparenz der ein oder mehreren Kunststofffenster in Abhängigkeit der Lichtintensität zu ändern;
eine Sonneneinstrahlung durch das mindestens ein Kunststofffenster oder einen Teil davon zu detektieren, wobei die Steuerung ausgestaltet ist die Transparenz der ein oder mehreren Kunststofffenster in Abhängigkeit der Sonneneinstrahlung zu ändern;
ein Signal einer Fernsteuerung eines Nutzers zu empfangen, wobei die Steuerung ausgestaltet ist die Transparenz der ein oder mehreren Kunststofffenster in Abhängigkeit des Signals der Fernsteuerung zu ändern;
eine Gefahrensituation zu detektieren, wobei die Steuerung ausgestaltet ist die Transparenz der ein oder mehreren Kunststofffenster in Abhängigkeit der Gefahrensituation zu ändern, vorzugsweise wird die Transparenz bei einer detektierten Gefahrensituation wiederholt geändert; und/oder
einen Einbruch zu detektieren, wobei die Steuerung ausgestaltet ist die Transparenz der ein oder mehreren Kunststofffenster in Abhängigkeit des detektierten Einbruchs zu ändern, vorzugsweise die Transparenz bei einem detektierten Einbruch wiederholt zu ändern.

8. Torsystem nach einem der Ansprüche 1 bis 7, wobei mindestens eines, vorzugsweise jedes der mindestens einen Kunststofffenster individuell mittels eines flexiblen Kabels mit der Steuerung verbunden ist; und/oder
wobei die Transparenz des einen oder der mehreren Kunststofffenster des mindestens einen Kunststofffensters so geändert wird, dass wahlweise ein Sichtschutz eingeschaltet oder ausgeschaltet wird.

9. Torsystem nach einem der Ansprüche 1 bis 8, wobei die Steuerung ausgestaltet ist, die Transparenz aller Kunststofffenster eines Segments individuell zu ändern, und/oder
wobei die Steuerung ausgestaltet ist, die Transparenz der ein oder mehreren Kunststofffenster in Abhängigkeit einer vordefinierten Zeit und/oder des Sonnenverlaufs zu ändern.

10. Torsystem nach einem der Ansprüche 1 bis 9, wobei das Tor ein Industrietor ist, und wobei das Industrietor vorzugsweise eines der folgenden Tore ist:
ein Garagentor;
ein Sektionaltor;
ein Falttor;
ein Schnelllauftor;
ein Schiebetor;
ein Hubstaffeltor;
ein Hebefalttor;
ein Hangartor;
ein Gewebehubtor; und
ein Schiffswerfttor.

11. Torsystem nach einem der Ansprüche 1 bis 10, wobei benachbarte Segmente der Vielzahl von Segmenten des Tors gelenkig miteinander verbunden sind, um das Tor aus einer Schließstellung in eine Offenstellung und aus der Offenstellung in die Schließstellung zu bringen,
wobei jedes der mindestens einen Kunststofffenster mittels mindestens eines Kabels mit der Steuerung verbunden ist, wobei das mindestens eine Kabel in einem Kabelstrang zusammengefasst ist, und
wobei die Steuerung ausgestaltet ist, das Tor aus der Schließstellung in die Offenstellung und aus der Offenstellung in die Schließstellung zu bringen.

12. Torsystem nach einem der Ansprüche 1 bis 11, wobei in dem Tor eine Tür (150) integriert ist, wobei das Tor vorzugsweise zumindest in dem Bereich der Tür (150) mit einem bodenseitigen Stabilisierungselement ausgebildet ist, und
wobei die Tür (150) ein Kunststofffenster der mindestens einen Kunststofffenster umfasst.

13. Torsystem nach einem der Ansprüche 1 bis 14, wobei die Steuerung ausgestaltet ist, die Transparenz mindestens eines, vorzugsweise jedes Kunststofffensters der mindestens einen Kunststofffenster automatisch nach Ablauf eines vorbestimmten Intervalls nach einer letzten Transparenzänderung zu ändern.

14. Verfahren (200) zur Herstellung einer flächigen Struktur, wobei das Verfahren (200) die folgenden Schritte umfasst:
Auftragen (210) einer elektrochromatischen Schicht auf eine erste Kunststoffscheibe;
Anfertigen (220) eines Kunststofffensters mit einer Doppelverglasung unter Verwendung der ersten Kunststoffscheibe mit der elektrochromatischen Schicht und einer zweiten Kunststoffscheibe;
Einsetzen (230) des Kunststofffensters in eine flächige Struktur;
elektrisches Verbinden (240) des Kunststofffensters mit einer Steuerung zur Änderung einer Transparenz des Kunststofffensters mittels der elektrochromatischen Schicht.

15. Verfahren nach Anspruch 14, wobei eine Wandstärke der ersten Kunststoffscheibe mindestens 2 mm, mindestens 3 mm, mindestens 4 mm oder mindestens 5 mm beträgt; und/oder
wobei eine Wandstärke der zweiten Kunststoffscheibe mindestens 2 mm, mindestens 3 mm, mindestens 4 mm oder mindestens 5 mm beträgt; und/oder
die flächige Struktur ein Trennelement oder ein Tor, vorzugsweise ein Industrietor, umfasst.
